# EUROPÄISCHE PATENTANMELDUNG

(11) **EP 0 918 027 A1**
(43) Veröffentlichungstag der Anmeldung: **26.05.1999**
(21) Anmeldenummer: 98121896.9
(22) Anmeldetag: 18.11.1998
(51) Int. Cl.: B65G 53/46

(54) **Zellenradschleuse**

(30) Priorität: 22.11.1997 DE 19751921
(71) Anmelder: Waeschle GmbH, 88250 Weingarten (DE)
(72) Erfinder: Münsch, Erwin Dr., 74199 Untergruppenbach (DE); Maday, Christian, 74906 Bad Rappenau (DE)

(57) **Zusammenfassung**

Bei einer Zellenradschleuse, bestehend aus einem Gehäuse (1) mit Zulauf (2) und Auslauf (3), einem Zellenrad (4) mit Zellenstegen, welche in Führungen radial bewegliche, gegen die Gehäuseinnenwand angedrückte Dichtleisten (5) aufweisen, und einer Nachstelleinrichtung zur Erzeugung von Axialkräften, welche mittels zur Achse der Antriebswelle des Zellenrades geneigter Wirkflächen (6) in die Dichtleisten (5) radial beaufschlagende Druckkräfte umsetzt, ist vorgesehen, daß die Zellenstege unter Bildung der geneigten Wirkflächen (6) in keilförmige, in den Führungen bewegliche, innere Stegplatten (7), welche kürzer als die Zellenlänge des Zellenrades (4) sind, und keilförmige, in den Führungen bewegliche, äußere Stegplatten (8) geteilt sind und daß die mittels der Nachstelleinrichtung auf einzelne oder alle inneren Stegplatten wirksamen Axialkräfte in Normalkräfte an den Wirkflächen (6) umsetzbar sind.

## Beschreibung

Die Erfindung betrifft eine Zellenradschleuse, bestehend aus einem Gehäuse mit Zulauf und Auslauf, einem Zellenrad mit Zellenstegen, welche in Führungen radial bewegliche, gegen die Innenwand des Gehäuses gedruckte Dichtleisten aufweisen, und aus einer Nachstelleinrichtung zur Erzeugung von Axialkräften, welche diese Axialkräfte mittels zur Achse der Antriebswelle des Zellenrades geneigten Wirkflächen in die Dichtleisten radial beaufschlagende Druckkräfte umsetzt.

Zellenradschleusen des vorgenannten Aufbaus dienen in der Regel zum Ausschleusen von fließfähigen Schüttgütern aus Behältern zum Zwecke der Abpackung oder der Übergabe in ein Fördersystem. Ferner können solche Zellenradschleusen zum Dosieren eingesetzt werden, da sich der Mengenstrom bei vorgegebenem Volumen der Zellen sehr leicht über die Antriebsdrehzahl des Zellenrades regeln läßt.

Das Zellenrad ist beiderseits des Produktdurchgangs in Flanschen des Gehäuses gelagert. Die Zellenstege müssen umfangs- und stirnseitig gegen die Innenwand des Gehäuses dichten. Zur umfangsseitigen Abdichtung können sie mit Dichtleisten ausgestattet werden.

Da die meisten fließfähigen Schüttgüter zu Verschleiß an den Zellenstegen bzw. den Dichtleisten führen, sind die Zellenstege zum Verschleißausgleich vorteilhaft mit in Führungen radial beweglichen, selbstnachstellenden Dichtleisten ausgerüstet. Diese werden mit radialen Druckkräften beaufschlagt, welche z.B. durch Formänderung elastischer Mittel wie Druckfedern erzeugt werden. Die Federn können direkt in den Zellenstegen untergebracht werden (EP 0 594 949). Da so für jede bewegliche Dichtleiste mindestens eine Druckfeder notwendig ist, werden auf diese Weise der Aufbau und die Montage der Zellenradschleuse sehr aufwendig. Hinzu kommt eine gewisse Störanfälligkeit, weil die Federn und damit die Federkräfte aufgrund des nur sehr engen, zur Verfügung stehenden Bauraums in den Zellenstegen klein sind. Kommt es zum Verklemmen der beweglichen Dichtleisten in der Führung, reicht die Federkraft nicht mehr aus, die Klemmkräfte zu überwinden, so daß die umfangsseitige Abdichtung versagt.

Bei einer anderen bekannten Ausführung (DE 36 23 454), von der die Erfindung ausgeht, ist die Antriebswelle als Hohlwelle ausgebildet. Die beweglichen Dichtleisten werden von der Hohlwelle aus mit radialen Druckkräften beaufschlagt. Zu diesem Zweck ist in der Hohlwelle eine Nachstelleinrichtung angeordnet, welche mittels zweier konischer Wirkflächen die von einer Druckfeder gemeinsam erzeugten Axialkräfte in radiale Druckkräfte umsetzt.

Diese wirken auf radial verschiebliche, in den Zellenstegen geführte Bolzen Die Bolzen übertragen die Radialkräfte auf die beweglichen Dichtleisten der Zellenstege.

Auch diese Konstruktion ist relativ aufwendig. Wegen der zylindrischen Führungen für die Bolzen in den Zellenstegen werden diese notwendigerweise dicker. Somit wird das nutzbare Zellenvolumen und damit der Mengenstrom bei vorgegebener Drehzahl vermindert. Ein weiterer Nachteil dieser Konstruktion liegt darin, daß die Radialkräfte punktförmig auf die Dichtleisten übertragen werden, was zu hoher Flächenpressung in den Gleitzonen der aufeinander gleitenden Bauteile führt und damit deren Verschleiß begünstigt. Auch läßt sich so eine erwünscht gleichmäßige Flächenpressung der Dichtleisten nur bei Verwendung eines sehr harten Dichtmaterials erzielen, was jedoch einer guten Dichtwirkung entgegensteht. Gleichermaßen ungünstige Kraftübertragungsverhältnisse liegen zwischen den konischen Wirkflächen der Nachstelleinrichtung und den Bolzen vor.

Der Erfindung liegt die Aufgabe zugrunde, eine Zellenradschleuse des eingangs genannten Aufbaus konstruktiv zu vereinfachen und funktionell zu verbessern, um zu einer funktionssicheren Bauweise zu gelangen.

Diese Aufgabe wird erfindungsgemäß dadurch gelöst, daß die Zellenstege unter Bildung der geneigten Wirkflächen in keilförmige, in den Führungen bewegliche, innere Stegplatten, welche kürzer als die Zellenlänge des Zellenrades sind, und keilförmige, in den Führungen bewegliche, äußere Stegplatten geteilt sind und daß die mittels der Nachstelleinrichtung auf einzelne oder alle inneren Stegplatten wirksamen Axialkräfte in Normalkräfte an den Wirkflächen umsetzbar sind.

Bei der erfindungsgemäßen Ausbildung sind nicht nur die Dichtleisten, sondern auch die keilförmigen, inneren und äußeren Stegplatten beweglich in Führungen untergebracht. In die inneren Stegplatten können durch geeignete Mittel die Axialkräfte so eingeleitet werden, daß die zur Wellenachse geneigten Wirkflächen zwischen den keilförmigen Stegplatten unter Normalkraft stehen. Diese Normalkräfte werden entsprechend dem Neigungswinkel der Wirkflächen und entsprechend der Reibsituation in den Wirkflächen einerseits sowie zwischen den Stegplatten und ihren Führungen andererseits in radiale, die Dichtleisten beaufschlagende Druckkräfte umgesetzt. Verschleißen nun unter der Wirkung dieser Druckkräfte die Dichtleisten, kommt es zur Relativbewegung zwischen den inneren und den äußeren Stegplatten unter Aufrechterhaltung der Normalkraft in den als Gleitebenen fungierenden Wirkflächen. Die Relativbewegung wird durch den Umstand ermöglicht, daß die inneren Stegplatten kürzer als die Zellenlänge des Zellenrades sind und so eine Axialverschiebung zulassen. Dabei erfahren in der Führung die inneren Stegplatten eine Axialverschiebung und die äußeren eine Radialverschiebung, weiche den radialen Verschleiß der Dichtleisten ausgleicht.

Der besondere Vorteil der erfindungsgemäßen Ausführung besteht darin, daß zur Umsetzung der einzeln oder gemeinsam auf die inneren Stegplatten wirkenden Axialkräfte in radiale Druckkräfte keilförmige Stegplatten dienen, wodurch die Kraftumsetzung fast auf der gesamten Länge der Zellen erfolgt. Dadurch wird die Flächenpressung der Dichtleisten auch bei Verwendung eines weicheren Dichtmaterials gleichmäßig und erfolgt die Kraftumsetzung an den Wirkflächen ohne nennenswerten Verschleiß. Auch wird in den Stegen selbst kein Bauraum für kraftübertragende Teile benötigt, so daß diese nicht so dick ausgeführt werden müssen, was einerseits zu Materialeinsparung und andererseits zu größeren nutzbaren Zellenvolumina führt.

Die Vorteile der erfindungsgemäßen Ausbildung sind unabhängig von der Natur der einzeln oder gemeinsam erzeugten Axialkräfte, welche so in die inneren Stegplatten eingeleitet werden, daß die Wirkflächen zwischen den keilförmigen Stegplatten unter Normalkraft stehen. Gemeinsam können die Axialkräfte z.B. mittels eines an die Zellenradschleuse stirnseitig angebauten oder in die Hohlwelle des Zellenrades eingebauten Pneumatikzylinders, Hydraulikzylinders oder Federmechanismus' erzeugt werden. Einzeln können die Axialkräfte z.B. mit an die Stirnscheiben des Zellenrades angebauten, auf die inneren Stegplatten wirkenden Druckfedern erzeugt werden.

Eine vorteilhafte Ausführung zur Einleitung gemeinsam erzeugter Axialkräfte in die inneren Stegplatten zeichnet sich dadurch aus, daß die Antriebswelle als Hohlwelle mit Längsschlitzen ausgeführt ist, durch welche hindurch die inneren Stegplatten mit einem in der Hohlwelle axial verschieblichen von den Axialkräften beaufschlagten Zylinder in formschlüssiger Verbindung stehen.

Die formschlüssige Verbindung wird vorteilhaft durch nach innen ragende Mitnehmer an den inneren Stegplatten und entsprechende Aussparungen am Zylinder gebildet. Die Längsschlitze der Hohlwelle erlauben den Durchgriff der Mitnehmer längs des axialen Verstellweges der inneren Stegplatten.

In vorteilhafter Ausführung zur gemeinsamen Erzeugung der Axialkräfte ist vorgesehen, daß der Zylinder unter Wirkung einer die Axialkraft erzeugenden, zumindest teilweise im Zylinder untergebrachten, zwischen der Hohlwelle und dem Zylinder wirkenden Feder steht.

In weiterhin vorteilhafter Ausführung ist vorgesehen, daß die Führungen für die Stegplatten und Dichtleisten aus je zwei mit der Hohlwelle dicht verbundenen, zwischen sich einen Führungsspalt bildenden Platten und zwei außerhalb der Zulauföffnung und der Auslauföffnung angeordneten Stirnscheiben bestehen, welche mit den einander gegenüberliegenden Stirnkanten der Platten einerseits und der Hohlwelle andererseits dicht verbunden sind.

Die stirnseitige Abdichtung der Zellen gegen das Gehäuse erfolgt also nicht durch die Zellenstege selbst, sondern dadurch, daß nur die Stirnscheiben gegen das Gehäuse abgedichtet werden.

In besonders vorteilhafter Ausführung ist vorgesehen, daß die Stirnscheiben an ihrem Umfang nach außen hin Konusflächen aufweisen, und daß unter axialer Federkraft stehende, an diesen Konusflächen einerseits und an der Gehäuseinnenwand andererseits anliegende Dichtringe vorgesehen sind. Diese Ausführung der Abdichtung ist bei allen Zellenradschleusen mit nachstellbaren Dichtleisten in gleich vorteilhafter Weise einsetzbar. Durch die Konusflächen entstehen zusätzlich Radialkräfte, so daß eine Abdichtung sowohl gegen die Stirnscheiben als auch gegen die Gehäuseinnenwand erfolgt.

Bei der erfindungsgemäß ausgebildeten, aber auch bei jeder anderen Zellenradschleuse tritt ein weiteres Verschleißproblem durch den radialen Andruck der Dichtleisten auf.

Weil die radial beweglichen Dichtleisten in den Bereich der Zu- und Auslauföffnung nicht aus ihren Führungen fallen dürfen, wird ihr radialer Verschiebeweg auch in diesen Winkelbereichen begrenzt. Das erfolgt dadurch, daß die Zellen und damit auch die Zellenstege mit ihren Dichtleisten auf beiden Stirnseiten axial etwas länger ausgeführt sind als der axialen Länge der Zu- und Auslauföffnung entspricht. Im Bereich der beidseitigen, axialen Überstände der Zellenstege gleiten also die Dichtleisten noch an der Gehäuseinnenwand, wodurch ihr radialer Verschiebeweg auch in den Drehwinkelbereichen der Zu- und Auslauföffnung begrenzt bleibt und ein Herausfallen der Dichtleisten aus ihren Führungen unterbunden wird. Die Dichtleisten stehen aber auch in diesen Winkelbereichen unter derselben radialen Druckkraft wie die übrigen, an der Innenwand vollflächig anliegenden Dichtleisten. Die Berührflächen zwischen Dichtleisten und Gehäuseinnenwand sind hier jedoch auf die axialen Überstände der Dichtleisten begrenzt, was zu hoher Flächenpressung und damit zu erhöhtem, örtlichem Verschleiß der Dichtleisten in diesen Gleitzonen führt. Die Folge ist unterschiedlicher Verschleiß über die Länge der Dichtleisten und damit nachlassende, radiale Dichtheit der Dichtleisten. Dieses Problem läßt sich nicht beheben, wenn die Dichtleisten mit einzeln wirkenden radialen Druckkräften beaufschlagt werden, wohl aber bei Zellenradschleusen der erfindungsgemäßen Art, wie auch bei allen Zellenradschleusen mit einer zentralen Nachstelleinrichtung, welche eine für mehrere Dichtleisten gemeinsam wirkende Kraft in die Dichtleisten radial beaufschlagende Druckkräfte umsetzt.

Der Erfindung liegt deshalb die weitere Aufgabe zugrunde, eine Zellenradschleuse mit den Merkmalen des Oberbegriffs des Anspruchs 8 funktionell so zu verbessern, daß eine dauerhaft gleichmäßige, radiale Dichtwirkung der Dichtleisten über deren gesamte Länge zu erreichen ist.

Diese Aufgabe wird erfindungsgemäß dadurch gelöst, daß die Innenwand des Gehäuses in den vom Zellenrad überstrichenen Drehwinkelbereichen der Zulauföffnung und der Auslauföffnung über die gesamte Länge der Dichtleisten jeweils einen etwas größeren Radius aufweist als in den übrigen, vom Zellenrad überstrichenen Drehwinkelbereichen.

Bei Zellenradschleusen mit einer Nachstelleinrichtung, welche eine für mehrere Dichtleisten gemeinsam wirkende Kraft in radiale, diese Dichtleisten beaufschlagende Druckkräfte umsetzt, entsteht nur dann eine erwünschte gleichmäßige Flächenpressung an diesen Dichtleisten, wenn die Berührflächen dieser Dichtleisten gleichen Abstand zur Mittelachse der Zellenradwelle aufweisen. Ist das nicht der Fall, wird die für diese Dichtleisten gemeinsam wirkende Kraft nicht mehr in radiale, alle diese Dichtleisten beaufschlagende Druckkräfte umgesetzt, sondern nur noch in diejenigen Dichtleisten beaufschlagende, entsprechend größere, radiale Druckkräfte umgesetzt, deren gemeinsame Berührfläche mit der Gehäuseinnenand den kürzesten Abstand zur Mittelachse der Zellenradwelle aufweisen. Die übrigen Dichtleisten mit größerem Abstand der Berührfläche erfahren dann keine dichtende Radialkraft mehr, weil sie radial ausweichen können und damit den Kraftschluß verlieren.

Genau diese Wirkung wird bei der erfindungsgemäßen Ausführung einer Zellenradschleuse mit einer Nachstelleinrichtung der genannten Art für die Dichtleisten erreicht, jedoch nur für diejenigen Zellenstege, welche gerade die Zulauföffnung oder die Auslauföffnung überstreichen. In diesen Drehwinkelbereichen des Zellenrades wird aber eine radiale Abdichtung der Zellen nicht benötigt, weil in diesen Drehwinkelbereichen ja die Zellen mit Schüttgut befüllt bzw. von Schüttgut entleert werden. Es sind in diesen Bereichen lediglich die Dichtleisten gegen Herausfallen aus den Führungen zu sichern, was durch die beidseitigen, axialen Überstände der Zellenstege über die Zu- und Auslauföffnung hinaus erreicht wird. Diese Sicherung bleibt auch durch die Vergrößerung des Radius' der Gehäuseinnenwand noch gewährleistet. Es kommt also zu keiner über die Länge der Dichtleiste ungleichmäßigen Flächenpressung und damit zu keinem über die Länge der Dichtleiste ungleichmäßigen Verschleiß. Die Dichtwirkung in den maßgeblichen Drehwinkelbereichen des Zellenrades wird dadurch nachhaltig verbessert.

Ein weiterer Vorteil der erfindungsgemäßen Ausführung besteht darin, daß durch die Entlastung eines Teils der Dichtleisten von Radialkräften die Radialkräfte auf die übrigen Dichtleisten verstärkt werden, weil ja die Summe aller Radialkräfte derselben konstruktiv vorgegebenen, für mehrere Dichtleisten gemeinsam wirkenden Ausgangskraft entspricht. Dadurch wird die Flächenpressung und damit die Dichtwirkung der Dichtleisten in den maßgeblichen, übrigen Drehwinkelbereichen erhöht. Insgesamt wird also die gesamte radiale Abdichtung des Zellenrades durch die erfindungsgemäße Ausführung nachhaltig verbessert. Zugleich wird die Standzeit der Dichtleisten durch Vergleichsmäßigung des Verschleißes vergrößert.

In vorteilhafter Ausführung der Radienänderungen der Gehäuseinnenwand ist vorgesehen, diese nicht sprunghaft, sondern mit stetigem Verlauf über einen gewissen Drehwinkelbereich hinweg vorzunehmen, wobei der Winkelbereich der Radienänderung jeweils außerhalb desjenigen der Zu- und der Auslauföffnung liegt. Dadurch ist gewährleistet, daß die Dichtleisten über den gesamten Winkelbereich der Zulauföffnung und der Auslauföffnung wunschgemäß druckentlastet sind und daß sie bei fortschreitender Drehung des Zellenrades nicht an Störkanten der Gehäuseinnenwand stoßen. Die Änderung der Flächenpressung und damit der Kraftwechsel zwischen den verschiedenen Dichtleisten beim Umlauf des Zellenrades wird auf diese Weise nicht ruckartig, sondern mit zeitlicher Verstetigung vorgenommen, was eine schonende Beanspruchung und damit eine Erhöhung der Lebensdauer aller Bauteile zur Folge hat.

Nachstehend ist die Erfindung anhand eines in der Zeichnung wiedergegebenen Ausführungsbeispiels beschrieben. In der Zeichnung zeigen:
- Fig. 1: einen Axialschnitt einer Zellenradschleuse;
- Fig. 2: einen Radialschnitt einer Zellenradschleuse und
- Fig. 3 und 4: den Fig. 1 und 2 entsprechenden Schnitt einer weiteren Ausführungsform der Erfindung.

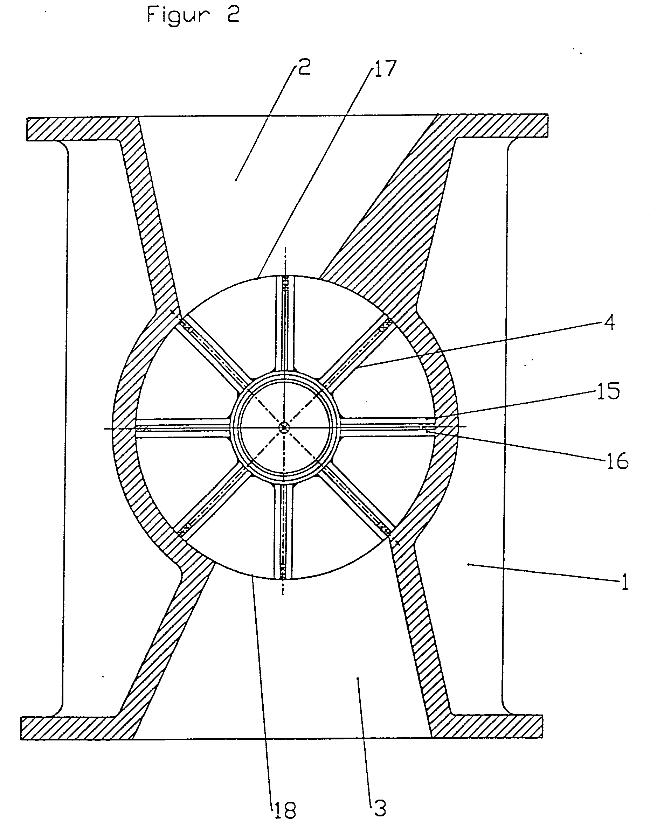

Die Zellenradschleuse weist in allen Ausführungen ein Gehäuse 1 mit einem Zulauf 2, einem Auslauf 3 und einem Mittelteil (Fig. 2) auf. Im Mittelteil läuft ein zylindrisches Zellenrad 4 um, das von einer Hohlwelle 9 angetrieben ist. Die Hohlwelle 9 ist in den Deckeln 25, 26, welche das Mittelteil des Gehäuses stirnseitig abschließen, gelagert und am Deckel 25 nach außen geführt. Von dort erfolgt die Einleitung des Drehmomentes.

Außerhalb der Zulauföffnung 17 und der Auslauföffnung 18 sind auf der Hohlwelle 9 die Stirnscheiben 19, 20 fest und dichtend angebracht. Mit diesen Stirnscheiben 19, 20 und der Hohlwelle 9 ebenfalls fest und dichtend verbunden sind die viereckigen Platten 15, 16. Diese bilden zusammen mit den Stirnscheiben 19, 20 die Führungen für die beweglichen Teile der Zellenstege. Die Zellenstege bestehen aus keilförmigen, inneren Stegplatten 7, welche kürzer als die Zellenlänge des Zellenrades 4 sind, und keilförmigen, äußeren Stegplatten 8, an deren umfangsseitigen Stirnkanten Dichtleisten 5 angeordnet sind. Die Stegplatten 7, 8 bilden gemeinsame, zur Achse der Hohlwelle geneigte Wirkflächen 6.

Innerhalb der Hohlwelle 9 ist ein Hohlzylinder 11 axial verschieblich angeordnet. Im Hohlzylinder 11 ist eine Druckfeder 14 zwischen dem Deckel 27 des Hohlzylinders 11 und dem Verschlußstopfen 28 der Hohlwelle 9 eingespannt. Die innere Stegplatte 7 kann sich in der Führung axial bewegen, weil sie kürzer als die Zellenlänge des Zellenrades 4 ausgeführt ist. Sie weist einen Mitnehmer 12 auf, welcher einen in der Hohlwelle 9 angeordneten Längsschlitz 10 durchgreift, mit einer entsprechenden Aussparung 13 am Hohlzylinder 11 kämmt und so eine formschlüssige Verbindung zwischen Hohlzylinder 11 und innerer Stegplatte 7 herstellt.

Die von der Druckfeder 14 erzeugten, für alle Dichtleisten gemeinsam wirkenden Axialkräfte werden in die zu diesen Dichtleisten gehörenden, inneren Stegplatten 7 eingeleitet. Über die keilförmigen Wirkflächen 6 werden sie in radiale Druckkräfte umgesetzt, welche auf die äußeren Stegplatten 8 und damit auf die Dichtleisten 5 wirken. Dabei erfahren die äußeren Stegplatten 8 und somit auch die Dichtleisten 5 die gewünschte Radialverschiebung.

Die axiale Abdichtung erfolgt am äußeren Umfang der Stirnscheiben 19, 20, welche zu diesem Zweck Konusflächen 21, 22 aufweisen. Gegen diese Konusflächen sowie gegen die zylindrische Gehäuseinnenwand liegen unter axialer Federkraft stehende Dichtringe 23, 24 an.

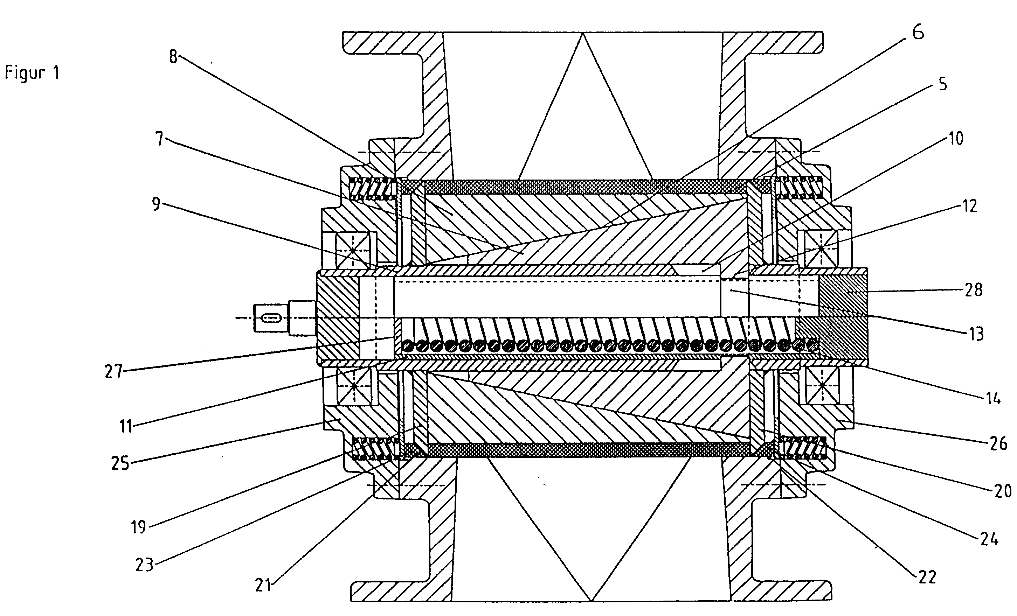

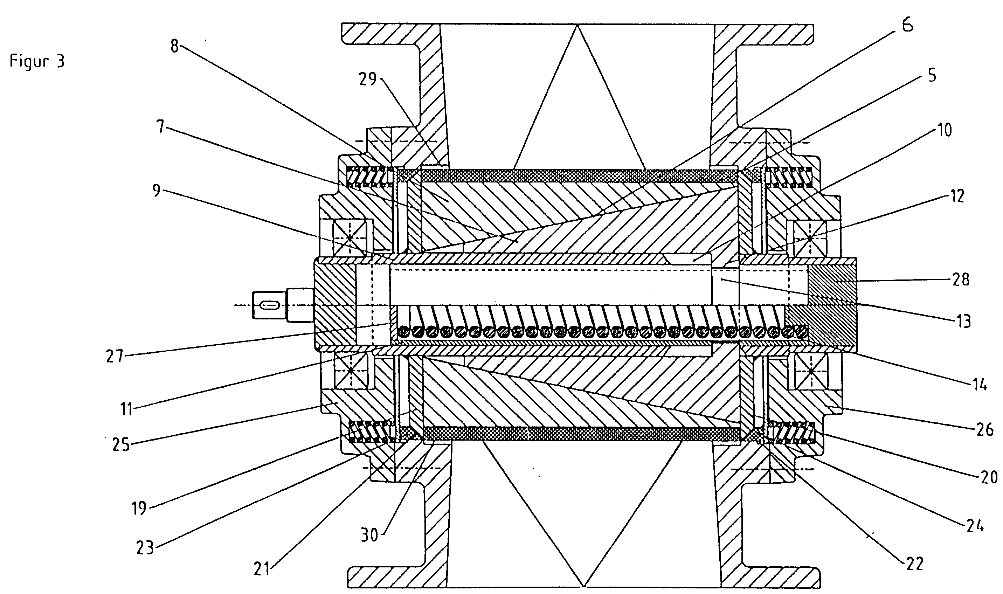

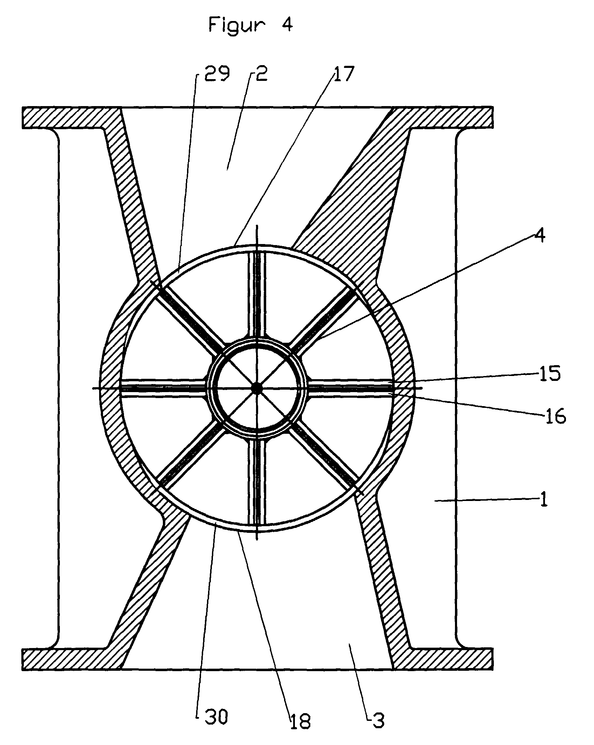

Bei der Ausführungsform gemäß Fig. 1 und 2 weist das Gehäuse 1 einen einheitlichen Durchmesser im gesamten Bewegungsbereich der Dichtleisten 5 auf. Bei dem Ausführungsbeispiel gemäß Fig. 3 hingegen weist die Gehäuseinnenwand der Zellenradschleuse in den vom Zellenrad überstrichenen Drehwinkelbereichen 29, 30 der Zulauföffnung 17 bzw. der Auslauföffnung 18 über die gesamte Länge der Dichtleisten 5 jeweils einen etwas größeren Radius auf als in den übrigen, vom Zellenrad 4 überstrichenen Drehwinkelbereichen. Die Radienänderung der Gehäuseinnenwand verläuft stetig (Fig. 4) und außerhalb der vom Zellenrad überstrichenen Drehwinkelbereiche der Zulauföffnung 17 und der Auslauföffnung 18. Die axial über die Öffnungen überstehenden Enden der Dichtleisten stehen in diesem Bereich unter keiner Radialkraft bzw. können dieser ausweichen, so daß sie dort keine überhöhten Flächenpressung ausgesetzt sind.

## Patentansprüche

1. Zellenradschleuse, bestehend aus einem Gehäuse (1) mit Zulauf (2) und Auslauf (3), einem Zellenrad (4) mit Zellenstegen, welche in Führungen radial bewegliche, gegen die Innenwand des Gehäuses gedrückte Dichtleisten (5) aufweisen, und aus einer Nachstelleinrichtung zur Erzeugung von Axialkräften, welche diese Axialkräfte mittels zur Achse der Antriebswelle des Zellenrades geneigten Wirkflächen (6) in die Dichtleisten (5) radial beaufschlagende Druckkräfte umsetzt, dadurch gekennzeichnet, daß die Zellenstege unter Bildung der geneigten Wirkflächen (6) in keilförmige, in den Führungen bewegliche, innere Stegplatten (7), welche kürzer als die Zellenlänge des Zellenrades (4) sind, und keilförmige, in den Führungen bewegliche, äußere Stegplatten (8) geteilt sind und daß die mittels der Nachstelleinrichtung auf einzelne oder alle inneren Stegplatten wirksamen Axialkräfte in Normalkräfte an den Wirkflächen (6) umsetzbar sind.

2. Zellenradschleuse nach Anspruch 1, dadurch gekennzeichnet, daß die Nachstelleinrichtung die Axialkräfte pneumatisch, hydraulisch oder mittels mechanischer Federkraft erzeugt.

3. Zellenradschleuse nach Anspruch 1 und 2, dadurch gekennzeichnet, daß die Antriebswelle als Hohlwelle (9) mit Längsschlitzen (10) ausgeführt ist, durch welche hindurch die inneren Stegplatten (7) mit einem in der Hohlwelle (9) axial verschieblichen, von den Axialkräften beaufschlagten Zylinder (11) in formschlüssiger Verbindung stehen.

4. Zellenradschleuse nach Anspruch 3, dadurch gekennzeichnet, daß die formschlüssige Verbindung durch nach innen ragende Mitnehmer (12) an den inneren Stegplatten (7) und entsprechende Aussparungen (13) am Zylinder (11) gebildet sind.

5. Zellenradschleuse nach einem der Ansprüche 1 bis 4, dadurch gekennzeichnet, daß der Zylinder (11) unter Wirkung einer Axialkraft erzeugenden, zumindest teilweise im Hohlzylinder (11) untergebrachten, zwischen der Hohlwelle (9) und dem Zylinder (11) wirkenden Feder (14) steht.

6. Zellenradschleuse nach einem der Ansprüche 1 bis 4, dadurch gekennzeichnet, daß die Führungen für die Stegplatten (7), (8) und Dichtleisten (5) aus je zwei mit der Hohlwelle (9) dicht verbundenen, zwischen sich einen Führungsspalt bildenden Platten (15), (16) und zwei außerhalb der Zulauföffnung (17) und der Auslauföffnung (18) angeordneten Stirnscheiben (19), (20) bestehen, welche mit den einander gegenüberliegenden Stirnkanten der Platten (15), (16) einerseits und der Hohlwelle (9) andererseits dicht verbunden sind.

7. Zellenradschleuse, insbesondere nach einem der Ansprüche 1 bis 6, dadurch gekennzeichnet, daß die Stirnscheiben (19), (20) an ihrem Umfang nach außen hin Konusflächen (21), (22) aufweisen, und daß unter axialer Federkraft stehende, an diesen Konusflächen einerseits und an der Gehäuseinnenwand andererseits anliegende Dichtringe (23), (24) vorgesehen sind.

8. Zellenradschleuse, bestehend aus einem Gehäuse (1) mit Zulauföffnung (2) und Auslauföffnung (3), einem Zellenrad (4) mit Zellenstegen, welche in Führungen radial bewegliche, gegen die Innenwand des Gehäuses gedrückte Dichtleisten (5) aufweisen, und aus einer die Dichtleisten (5) mit radialen Druckkräften beaufschlagenden Nachstelleinrichtung, dadurch gekennzeichnet, daß die Innenwand des Gehäuses (1) in den vom Zellenrad (4) überstrichenen Drehwinkelbereichen der Zulauföffnung (17) und der Auslauföffnung (18) über die gesamte Länge der Dichtleisten (5) jeweils einen etwas größeren Radius aufweist als in den übrigen, von Zellenrad überstrichenen Drehwinkelbereichen.

9. Zellenradschleuse nach Anspruch 8, dadurch gekennzeichnet, daß die Radienänderung der Gehäuseinnenwand stetig und außerhalb der vom Zellenrad überstrichenen Drehwinkelbereiche der Zulauföffnung (17) und Auslauföffnung (18) verläuft.
